# EUROPEAN PATENT APPLICATION

(11) **EP 4 790 954 A1**
(43) Date of publication of application: **12.08.2026**
(21) Application number: 26156935.4
(22) Date of filing: 06.02.2026
(51) Int. Cl.: H04L 12/46

(54) **METHOD AND DEVICES OF COMMUNICATION IN A COMPUTING NETWORK USING TUNNELING OVER A SCALE-OUT NETWORK**

(30) Priority: 07.02.2025 US 202563756024 P
(71) Applicant: Marvell Asia Pte Ltd, Singapore 369522 (SG)
(72) Inventor: Burla, Satananda, Milpitas, CA, 95035 (US); Kalderon, Michal, Ramat Hasharon (IL)
(74) Representative: Grünecker Patent- und Rechtsanwälte PartG mbB

(57) **Abstract**

Methods for communication in a computing network and accompanying scale-up switches and design structures are described herein. According to an example embodiment, a method of communication in a computing network includes, by a scale-up switch, receiving a command packet generated by a compute component of a computing network. The method further includes, by the scale-up switch, identifying a destination compute component based on the command packet received and determining if the destination compute component is in a scale-up network or a scale-out network of the computing network. Responsive to the destination compute component being in the scale-out network, the method further includes, by the scale-up switch, embedding the command packet received in a network message and transmitting the network message to a scale-out fabric of the scale-out network. Communication in the computing network as described can be helpful for reducing demands upon the compute component and streamlining network communication.

## Description

### RELATED APPLICATIONS

This application claims the benefit of U.S. Provisional Application No. 63/756,024, filed on February 7, 2025. The entire teachings of the above application are incorporated herein by reference.

### BACKGROUND

The rapid evolution of modem computing, including for applications such as artificial intelligence (AI)/machine learning (ML) training and inference-based computing for non-limiting examples, may redefine the landscape of computing and the underlying network infrastructure. Addressing challenges that workloads associated with such modern computing technologies impose on networking infrastructure may require innovative approaches.

### SUMMARY

According to some embodiments, compute components, e.g., accelerators such as graphics processing units (GPUs) or tensor processing units (TPUs), within a computing network can be configured to communicate with other compute components (a destination compute component) in a scale-up network or a scale-out network of the computing network. However, placing burdens associated with decision making in network communication (for example, determining whether to communicate over a scale-up or scale-out interface, whether to generate a corresponding scale-up message or a corresponding scale-out message, respectively, or a combination thereof) on the compute component can place significant strain upon the compute component and limit their computational capacity or efficiency.

Methods and devices for communication in a computing network described herein can be useful for facilitating communication between a given compute component and a scale-up and scale-out network associated with the compute component. As non-limiting examples, the methods and devices described herein can be useful for shifting the burden of determining whether to generate a scale-up message or a scale-out message to communicate with a scale-up network or a scale-out network, respectively. Such communication can be handled by a separate device, e.g., a scale-up switch, that can be configured to couple communicatively to one or more compute components, forming a scale-up network, and to a scale-out fabric of the scale-out network.

An example embodiment is directed toward a method of communication in a computing network. The method comprises, by a scale up switch, receiving a command packet generated by a compute component of a computing network. The compute component is communicatively coupled to the scale-up switch. The method further comprises, by the scale-up switch, identifying a destination compute component in the computing network based on the command packet received and determining if the destination compute component is in a scale-up network of the computing network or a scale-out network of the computing network. Responsive to the destination compute component being in the scale-out network, the method further comprises, by the scale-up switch, embedding the command packet received in a network message and transmitting the network message to a scale-out fabric of the scale-out network. The scale-up switch is communicatively coupled to the scale-out fabric.

Responsive to the destination compute component being in the scale-up network, the method can further comprise, by the scale-up switch, transmitting the command packet to the destination compute component.

Embedding the command packet in the network message can include, by the scale-up switch, generating the network message, encapsulating the command packet within a first field of the network message, and providing an indication of the command packet encapsulated. The indication can be provided in a second field of the network message and detectable by the scale-out fabric or the scale-up switch. The network message can further include one or more of a tunnel identifier, a payload protocol identifier, a routing parameter, or a security parameter.

The method can further comprise, by the scale-out fabric, routing the network message to the destination compute component of the computing network. Routing the network message to the destination compute component can include, by the scale-out fabric, sending the network message to a destination scale-up switch. The destination scale-up switch can be configured to extract the command packet and to transfer the command packet extracted to the destination compute component.

The method can further comprise, by the scale-up switch, maintaining a table mapping a destination identifier of the command packet to a network address of the network message. Embedding the command packet in the network message can include mapping the destination identifier to the network address of the network message. The network address of the network message can be associated with one or more of the destination compute component or a destination scale-up switch communicatively coupled to the destination compute component.

The method can further comprise, by the scale-up switch, managing at least a portion of a delivery of the network message over the network fabric.

The network message can be formatted using a remote direct memory access (RDMA) protocol, the RDMA protocol including an ultra ethernet transport (UET) protocol or a RDMA over converged ethernet (RoCE) protocol. The network message can be a message sent over a scale-out network.

The command packet can be formatted using an ultra accelerator link (UAL) protocol or an ethernet for scale-up networking (ESUN) protocol. The command packet can be a packet sent over a scale-up network.

Another example embodiment is directed to a scale-up switch. The scale-up switch comprises a processor configured to couple communicatively to a compute component of a scale-up network and to a scale-out fabric of a scale-out network. The scale-up network and the scale-out network are part of a computing network. The processor is further configured to receive a command packet generated by the compute component and to identify a destination compute component of the computing network based on the command packet received. The processor is further configured to determine if the destination compute component is in a scale-up network or a scale-out network and, responsive to the destination compute component being in the scale-out network, to embed the command packet in a network message. The processor is further configured to transmit the network message to the scale-out fabric.

The processor can be further configured to, responsive to the destination compute component being in the scale-up network, transmit the command packet to the destination compute component.

Embedding the command packet in the network message can include, by the processor, generating the network message and encapsulating the command packet within a first field of the network message. Embedding the command packet in the network message can further include, by the processor, providing an indication of the command packet encapsulated. The indication can be provided in a second field of the network message and detectable by the scale-out fabric or the scale-up switch.

The processor can be further configured to receive an inbound network message from the scale-out fabric, extract an inbound command packet from the inbound network message received, and perform an operation responsive to the inbound command packet extracted.

The processor can be further configured to manage delivery of the network message over the network fabric.

The scale-up switch can further comprise memory communicatively coupled to the processor. The memory can be configured to maintain a table mapping a destination identifier of the command packet to a network address of the network message. The destination identifier can be associated with a destination compute component of the computing network or a destination scale-up switch communicatively coupled to the destination compute component.

The processor can be configured to receive and to transmit command packets formatted using a UAL protocol or an ESUN protocol.

The processor can be configured to generate and to receive network messages formatted using a UET protocol or an RoCE protocol.

Another example embodiment can be directed to a hardware description language (HDL) design structure encoded on a machine readable data storage medium. The HDL design structure comprises elements that when processed in a computer-aided design system generates a machine-executable representation of a scale-up switch. The HDL design structure comprises a first communication module configured to couple communicatively to a compute component of a scale-up network and a second communication module configured to couple communicatively to a scale-out fabric of a scale-out network. The scale-up network and the scale-out network are part of the computing network. The HDL design structure further comprises a processing module communicatively coupled to the first communication module and the second communication module. The processing module is configured to receive a command packet generated by the compute component and to identify a destination compute component of the computing network based on the command packet received. The processing module is further configured to determine if the destination compute component is in the scale-up network or the scale-out network and, responsive to the destination compute component being in the scale-out network, to embed the command packet in a network message. The processing module is further configured to transmit the network message to the scale-out fabric.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1 is a flow chart of an example embodiment of a method of communication in a computing network.
FIG. 2 illustrates schematically an example embodiment of a computing network.
FIG. 3 is a block diagram of an example embodiment of a scale-up switch.
FIG. 4 illustrates a block diagram of an example embodiment of a scale-up switch that can be used for communication in a computing network.
FIGS. 5A-5B illustrate example messages that can be transmitted in a computing network.
FIG. 6 illustrates an example embodiment of a tunneled packet that can be used in a computing network.

### DETAILED DESCRIPTION

A description of example embodiments follows.

According to some embodiments, a computing network may include at least scale-up networks and scale-out networks. In some embodiments, scale-up networking may focus upon connecting compute components that reside within a given computing group or cluster. The compute components may include graphics processing units (GPUs) or tensor processing units (TPUs) as non-limiting examples and the given computing group or cluster can be a rack, chassis, or a few racks in close proximity for non-limiting examples. According to some embodiments, scale-up networks may be defined by a proximity of the compute components, the proximity being such that the compute components may communicate using high-speed physical layer communication. Scale-up networks (or scale-up networking) may aim to optimize high-speed, low-latency communication within a localized environment. As used herein, scale-up communication can refer to communication using a scale-up protocol or to between devices in a scale-up network.

As used hereinbelow, an xPU may reference a computing component, including a GPU or a TPU as non-limiting examples. An xPU may also be referred to as an accelerator.

In some embodiments, scale-out network may focus on connecting groups, e.g., the scale-up networks, together over greater distances. Connecting over the greater distances may introduce challenges such as higher latency, congestion, and a need for more robust communication protocols. As used herein, scale-out communication can refer to communication using a scale-out protocol or to messages between devices in a scale-up network.

Efforts have been directed toward providing solutions for networking challenges, including challenges in developing scale-up and scale-out networks. As an example, a consortium initiative for scale-up networks, the Ultra Accelerator Link (UALink or UAL) consortium, has released a UALink specification, an open standard for communication between accelerators such as xPUs. For example, the UALink specification may provide communication protocols for die-to-die interconnects. As used herein, communication using UAL can be examples of scale-up communication and can be referred to as a UAL command, UAL packet, or a UAL message.

Similarly, with respect to scale-out networking, the Ultra Ethernet Consortium (UEC) has released an Ultra Ethernet Transport (UET) specification, which may be an open and interoperable network specification for communication over scale-out networks and may be built upon existing ethernet technologies or protocols. As used herein, communication using UET can be examples of scale-out communication and can be referred to as a UET message or a UET packet.

While example embodiments described hereinbelow may utilize UAL protocols for scale-up communication and UET protocols for scale-out communication, it should be understood that alternative protocols or methods for the scale-up and scale-out communication can also be utilized. Example alternative protocols can include, as non-limiting examples, ethernet for scale-up networking (ESUN) or remote direct memory access (RDMA) over converged ethernet (RoCE).

In some computing system architectures, each xPU may be connected to a network interface controller (NIC), for example, via a peripheral component interconnect express (PCIe) interface. The xPU may additionally be connected to a scale-up fabric. In such embodiments, an accelerator may be responsible for determining if a destination of a communication packet is within a scale-up or scale-out network and, accordingly, may need to implement logic for determining when and where to send data. For example, the xPU may send data to a scale-up fabric if a target or destination xPU is within a same group as the xPU (within a same scale-up network) or to the scale-out fabric if the destination xPU is in a different group (destination scale-up network is different from the scale-up network of the xPU).

In such computing architectures, sending data to the scale-out network may include communicating with a NIC over a PCIe interface. Such embodiments may require additional hardware and may introduce complexities including, but not limited to, increased total cost of ownership (TCO), higher power consumption, management overhead, and numerous potential failure points.

Additionally, contemporary scale-up networks may be vendor dependent. Non-limiting examples including NVIDIA^{®} NVLink or AMD^{®} XGMI. An objective of the UALink consortium may include establishing a vendor-neutral specification in response to the currently vendor-specific solutions. Regardless of the scale-up fabric, contemporary networks may implement a network wherein each xPU needs to access a NIC, for example, over a PCIe interface, to connect to a scale-out network.

Embodiments of methods and devices for network computing described herein may be directed toward a solution for removing a need for each accelerator to have access to a NIC (e.g., communicatively coupled to a NIC) and for managing data routing within a computing network. The embodiments can include a NIC-less scale-up architecture design that can eliminate a need for xPUs to determine whether they need to communicate over a scale-up network, e.g., using UAL, or a scale-out network, e.g., over PCIE with a UEC-compatible NIC. Based on such a solution, xPU-to-xPU communication may be seamless regardless of xPU location.

According to some embodiments of the methods and devices described herein, xPUs can use, e.g., communicate using, a scale-up network or a scale-up communication protocol only. In such embodiments, the xPU, which may be a source xPU, may not be aware of whether another xPU, e.g., a destination xPU, to which the source xPU is communicating is part of a scale-up or scale-out network. In some embodiments, an xPU can contain a UAL device for coupling communicatively to a UAL switch. The UAL switch can be configured to couple communicatively to a scale-out network and to transmit or receive messages using a scale-out protocol. Example scale-out protocols can include remote direct memory access (RDMA), which can include a UET protocol or a RDMA over Converged Ethernet (RoCE) protocol. The design approach of such embodiments can be transparent to underlying xPUs, which can be useful for simplifying networking architecture while maintaining high performance and scalability.

In some embodiments, a portion of logic, e.g., logic for determining if a message is transmitted to a scale-up or scale-out network, can reside in a UAL switch, which can convert UAL commands into UET packets. As described herein, example embodiments of methods and devices for a UAL switch to handle such communication can be directed toward tunneling of scale-up commands, e.g., UAL commands, inside scale-out packets or messages, e.g., UET or RDMA packets.

### Tunneling over Scale-out Networking Using UET or RDMA

According to some embodiments, communication of scale-up (e.g., UAL) commands over scale-out networks using UET (Ultra Ethernet Transport) or RDMA (Remote Direct Memory Access), as non-limiting examples, can be implemented by encapsulating scale-up command sets and data within a scale-out data payload, for example, a UET/RDMA Protocol Data Payload. This process may involve mapping UAL commands to UET/RDMA operations, which can for direct memory access between the xPUs without involving PCIe and CPU communication. The UAL commands, including their headers, can be encapsulated within UET/RDMA packets, which can then be transmitted over the network. This encapsulation ensures that UAL commands such as Request, Response, Read Data and Write Data can be efficiently handled by the UET/RDMA transport layer and arrive to a target xPU over the wire.

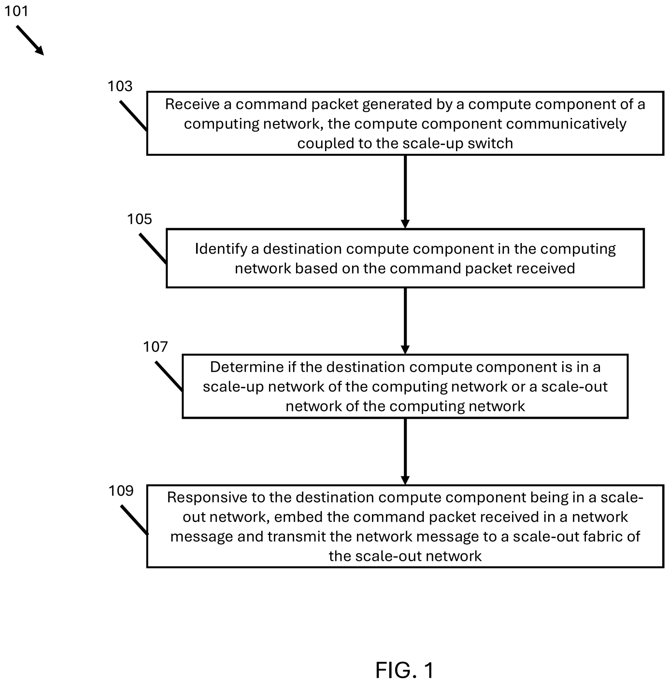

FIG. 1 illustrates a flow chart of an example embodiment of a method 101 of communication in a computing network. The method 101 may be performable by a scale-up switch and comprises receiving 103 a command packet generated by a compute component of a computing network. The compute component can be communicatively coupled to the scale-up switch. The method further comprises identifying 105 a destination compute component in the computing network based on the command packet received and determining 107 if the destination compute component is in a scale-up network of the computing network or a scale-out network of the computing network. The method further comprises, responsive to the destination compute component being in the scale-out network, embedding 109 the command packet received in a network message and transmitting the network message to a scale-out fabric of the scale-out network.

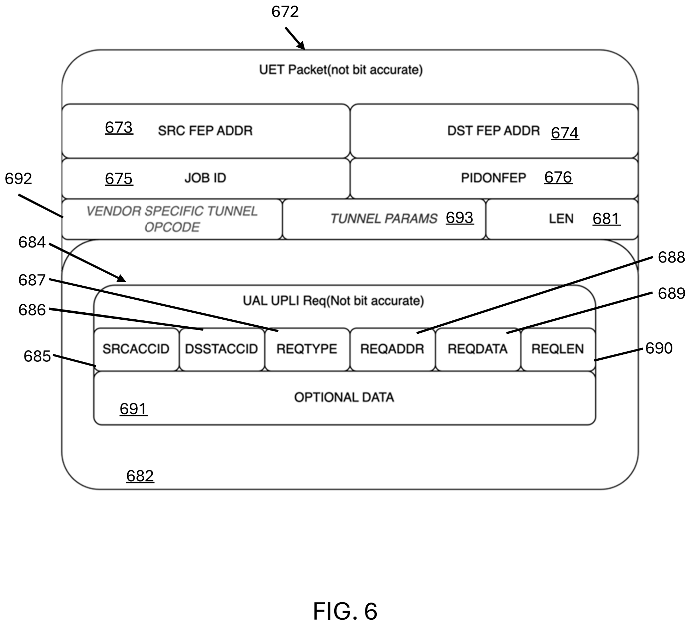

Another example embodiment within a context of a computing network can comprise the following:
a) Scale-up Command Creation: An xPU can generate a scale-up command, e.g., a UAL command, which can comprise request, response, read, or write commands as non-limiting examples.
b) The scale-up command can be sent to a scale-up switch, e.g., a UAL switch (the scale-up switch of the xPU generating a command can be referred to as a source scale-up switch).
c) The scale-up switch can determine whether the scale-up command destination, which can be a target xPU device, is within a scale-up fabric, e.g., a scale-up network, or needs to be sent out to a scale-out fabric. If the scale-up command is intended for a xPU within the scale-up fabric, the scale-up command can be forwarded as is or with minor modifications. Handling of commands in cases wherein the scale-up switch detects that the scale-up command is intended for an xPU outside the scale-up fabric or network is described hereinbelow. While UET is used as an example protocol for scale-out messaging, it should be understood that other protocols, including RoCE or RDMA protocols, may be similarly used.
d) Scale-out Transport: The scale-up command, e.g., the UAL command, can be encapsulated within a scale-out message, e.g., a UET message. This can involve wrapping the UAL command with UET headers to form a UET packet. An example embodiment of a UAL command within a UET packet is provided hereinbelow with reference to FIG. 6.
e) Transmission: The scale-out packet, e.g., the UET packet, can be transmitted over a network, e.g., the scale-out network, to a scale-up switch of the target xPU device (the scale-up switch of the target xPU can be referred to as a target scale-up switch). Transmission for the UET packet can be done over a UET packet delivery context (PDC). The PDC communication between the source scale-up switch and target scale-up switch can be handled within the respective scale-up switches. In some embodiments, a source scale-up switch, a destination scale-up switch, and a scale-out fabric can be combinedly responsible for ensuring transmission of a message (e.g., the scale-out packet).
f) Decapsulation: At the target scale-up switch, e.g., a target UAL switch, the UET headers of the UET packet can be stripped off, and the UAL command can be extracted and forwarded to the target xPU.

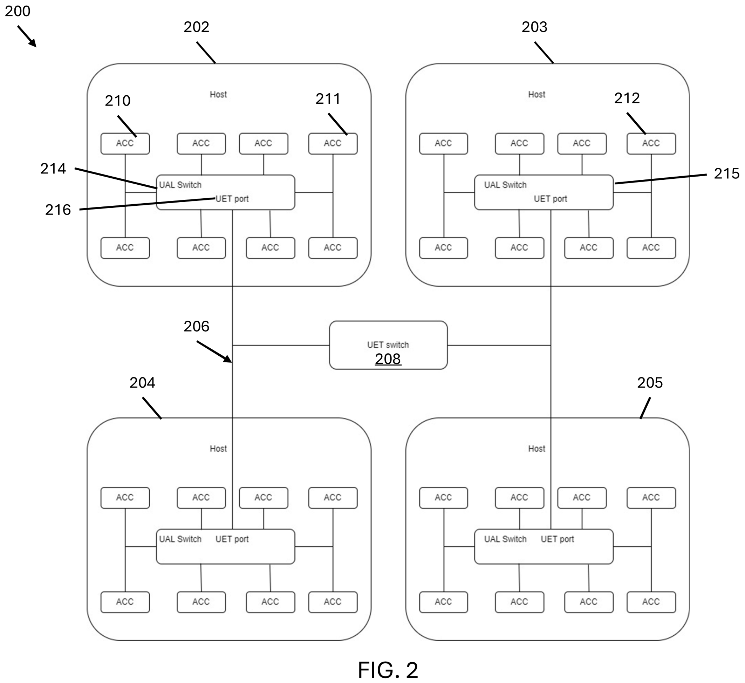

FIG. 2 illustrates an example embodiment of a computing network 200. The computing network 200 can include scale-up networks 202-205. The scale-up networks 202-205 can be communicatively interconnected by a scale-out fabric 206, which may include a scale-out switch 208. In some embodiments, the scale-out switch 208 may be configured to communicate using a UET protocol, in which the scale-out switch may be a UET switch. In other embodiments, the scale-out switch 208 can implement other protocols, including an RDMA protocol such as an RDMA over Converged Ethernet (RoCE) protocol. In some embodiments, the scale-out fabric 206 may include one or more of the scale-out switch 208 communicatively interconnected.

A scale-up network, for example, the scale-up network 202, can include one or more accelerators, e.g., the accelerators 210, 211, which may include GPUs or TPUs as non-limiting examples. The accelerators, including the accelerators 210, 211, can be configured to couple communicatively to a scale-up switch, which can include a UAL switch 214 configured to communicate with the accelerators 210 of the scale-up network 202 using a UAL protocol. The UAL switch 214 can further be configured to couple communicatively with the scale-out fabric 206 via a port, e.g., the UET port.

In some embodiments, logic regarding handling a message from an accelerator may be handled by the UAL switch 214. For example, the accelerator 210 may transmit a message to another accelerator within the computing network 200. The UAL switch may be configured to receive the message, which can be a scale-up message formatted in, for example, a UAL protocol, from the accelerator 210 and to determine handling of the message based upon a destination accelerator of the message. For example, if the destination accelerator is in the scale-up network 202 of the accelerator 210, e.g., the accelerator 211, the UAL switch 214 may be configured to transmit the message to the accelerator 211 using the UAL protocol. Alternatively, if the destination accelerator is in the scale-up network 203, e.g., the accelerator 212 of the scale-up network 203, the UAL switch 214 may be configured to convert the scale-up message to a scale-out message and to transmit the message to the scale-out fabric 206. The UET fabric 206 can route the message to the accelerator 212 via a destination scale-up switch, e.g., the UAL switch 215.

In such embodiments, a burden of facilitating communication within a computing network can be removed from the accelerators and handled, for example, by a scale-up switch. Additionally, in such embodiments, only scale-up switches, e.g., the scale-up switches 214, 215, can go out to a network (e.g., the scale-out fabric 206). Each accelerator, e.g., the accelerators 210-212, may not require its own NIC for scale-out communication.

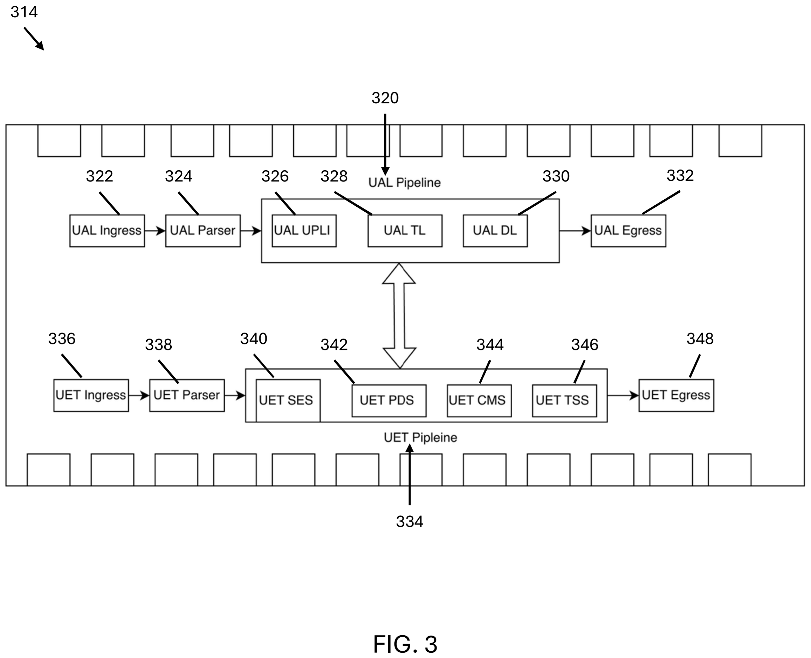

FIG. 3 is a block diagram of an example embodiment of a scale-up switch 314. As described hereinabove, the scale-up switch 314 can be communicatively coupled to one or more accelerators and can be configured to receive messages from and transmit messages to the one or more accelerators, wherein the messages can be formatted, for example, using a UAL protocol. The scale-up switch 314 can also be communicatively coupled to a UET fabric and can be configured to receive messages and transmit messages to the scale-out fabric, wherein the messages can be formatted using, for example, a UET protocol.

As illustrated in FIG. 3, a UAL pipeline 320 of the scale-up switch 314 can include a UAL ingress 322 and a UAL parser 324 configured to receive and to parse a UAL message, respectively. UAL may comprise a protocol stack with one or more layers and the scale-up switch may be configured to generate or process messages, e.g., the UAL message, at the one or more layers. Example embodiments of layers can include a protocol layer, e.g., UAL Protocol Level Interface (UPLI) 326, a transaction layer (TL), e.g., a UAL TL 328, and a data link layer (DL), e.g., a UAL DL 330. The UAL message can subsequently exit the scale-up switch at a UAL egress 332.

According to some embodiments wherein the scale-up switch is configured to use a UAL protocol stack, the UAL UPLI 326 may provide, for example, read, write, and atomic memory operators, for non-limiting example. The UAL TL 328 may handle connections between two UPLI interfaces, which may include a UPLI originator and a UPLI completer, and may handle packing and unpack of TL flits. The UAL DL 330 may handle transfer of data between the TL and a physical layer (PL) used for transfer of signals.

The scale-up switch 314 of FIG. 3 can further include a scale-out pipeline, which may include a UET pipeline 334 for a scale-up switch configured to receive and transfer messages formatted using a UET protocol. The UET pipeline 334 can include a UET ingress 336 and a UET parser 338 configured to receive and to parse a UET message, respectively. The scale-up switch 314 can be configured to generate or process messages, e.g., the UET message, at one or more sublayers. UET can define sublayers within a transport layer of network communication and the sublayers can comprise a semantics sublayer (SES) 340, packet delivery sublayer (PDS) 342, congestion management sublayer (CMS) 344, and transport security sublayer (TSS) 346. The UET message can subsequently exit the scale-up switch at a UET egress 348.

According to some embodiments wherein the scale-up switch 314 is configured to use a UET protocol stack, the SES 340 can define addressing, authorization, message types, protocols, and semantic header formats between endpoints as non-limiting examples. In such embodiments, the SES 340 can operate at a level of transactions, which can include messages or remote memory access (RMA). The SES 340 can further break message or RMAs into packets for transmission via the PDS 342. The PDS 342 can transport the packets to a destination fabric end point (FEP) and can pass them to a target SES of the end point for processing. The CMS 344 can handle transmission of the packets such the packets are transmitted at a highest rate while minimizing network congestion. The TSS 346 can be useful for defining scalable encryption and authentication mechanisms.

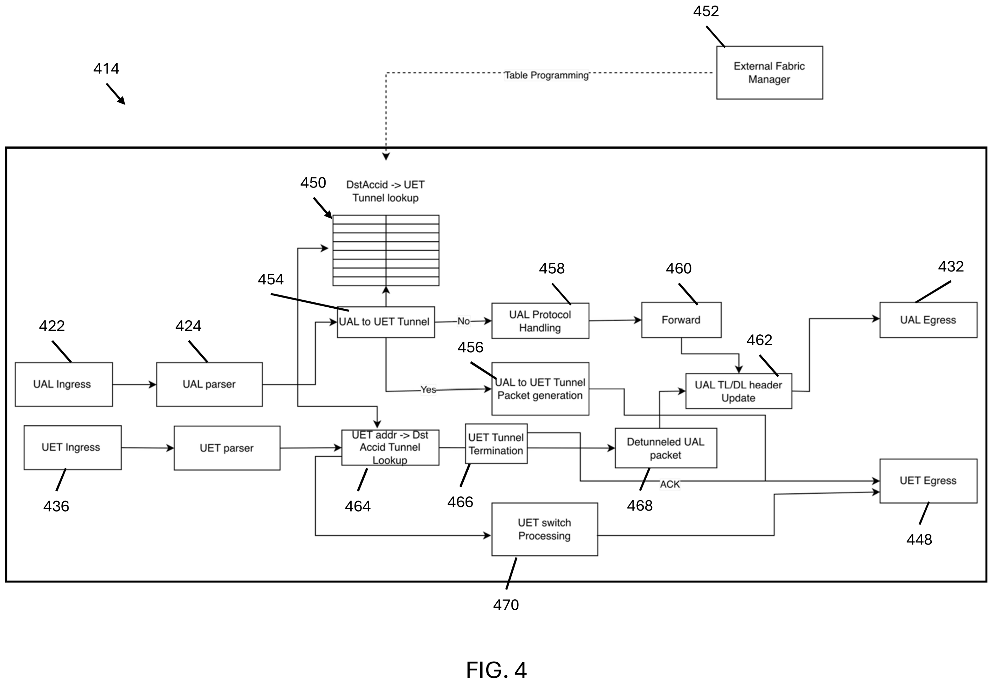

FIG. 4 illustrates a block diagram of an example embodiment of a scale-up switch 414 that can be used for communication in a computing network. The scale-up switch 414 can be configured to process scale-up messages using a UAL protocol and scale-out messages using a UET protocol. In some embodiments, the scale-up switch 414 can be a UAL switch.

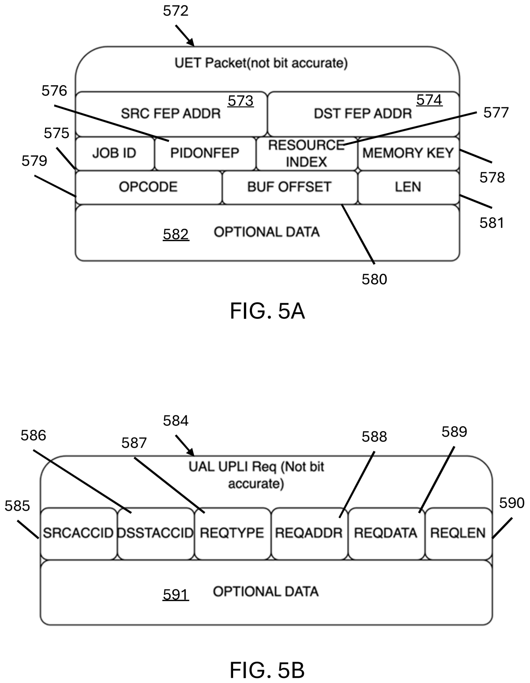

A UAL message (which may also be referred to herein as a UAL packet or UAL command) received by the scale-up switch 414 can arrive at a UAL ingress 422 and be parsed at a UAL parser 424. The UAL message can be a message sent to the scale-up switch 414 by an accelerator communicatively coupled thereto. The scale-up switch 414 can be configured to determine if a destination compute component of the UAL message is located within or scale-up or scale-out network, for example, based on a destination accelerator identifier field (DstAccid, as further described hereinbelow with reference to FIG. 5B) of the UAL message. In some embodiments, the scale-up switch 414 can include a lookup table 450 mapping destination accelerator identifiers to UET tunnel codes, which may be programmed by an external fabric manager 452.

The scale-up switch 414 can determine whether a UAL message should be converted to a UET tunnel 454. In some embodiments, the scale-up switch 414 can use the lookup table 452 to determine, based on the destination accelerator identifier field, if the UAL message needs to be converted into a UET message to be sent to a scale-out network or if the UAL message needs to be sent to a destination compute component within the scale-up network. Responsive to the destination compute component being in a scale-out network, the UAL switch can progress to UAL to UET Tunnel Packet generation 456. In this step, as further described hereinbelow with reference to FIGS. 5A-6, the UAL message can be tunneled within a UET packet. The UET packet can include a destination based on the lookup table 450. The UET packet can then progress to a UET egress 448 to be sent out over the scale-out network.

Responsive to the destination compute component being in the scale-up network, the scale-up switch 414 can proceed to UAL Protocol Handling 458. The UAL message can be forwarded 460 and can undergo UAL TL/DL header updating 462. The UAL message can then proceed to a UAL egress 432 and can be sent to an accelerator within the scale-up network.

A UET message (which may also be referred to herein as a UET packet) received by the scale-up switch 414 can arrive at a UET ingress 436 and be parsed at a UET parser 438. The scale-up switch 414 can be configured to perform a determination 464 based on a UET address if a destination accelerator is within the scale-up network of the scale-up switch 414 based on the lookup table 450. Responsive to the destination accelerator being within the scale-up network of the scale-up switch 414, the UET message can proceed toward UET Tunnel Termination 466 and extracting a detunneled UAL packet 468. According to some embodiments, the UET tunnel termination 466 can comprise processing a UET packet based on the UET protocol specification, decapsulating a UET header, and passing on a UAL packet (which may be associated with the UET header) to a next stage of a processing pipeline. The detunneled UAL packet 468 can undergo the UAL TL/DL header update 462 and can subsequently proceed to the UAL egress 432. If the destination accelerator is not within the scale-up network of the scale-up switch, the UET message can undergo UET switch processing 470 and proceed to the UET egress 448 (e.g., transmitted to the scale-out network for routing a scale-up network of the destination accelerator).

In some embodiments, a scale-up switch, e.g., the scale-up switches 314, 414 of FIGS. 3 and 4, respectively, can comprise a state machine. The state machine may be configured to transition between states, for example, as illustrated in FIGS. 3 and 4, based upon a received UAL or UET message.

FIGS. 5A-5B illustrate example messages that can be transmitted in a computing network. Fields described hereinbelow with respect to the example messages can be used, for example, for tunnel header generation and lookup. In some embodiments, such tunnel header generation and lookup can comprise the UAL to UET Tunnel Packet generation 456, the UAL TL/DL header updating 462, or the determination 464, based on the UET address, if the destination acceleration is within the scale-up network described herein with respect to FIG. 4.

FIG. 5A illustrates an example scale-out message packet. The scale-out message packet can be a UET packet 572, as defined within the Ultra Ethernet Specification, and, as illustrated, may not be to scale with respect to the bit sizes of each field. Fields in the UET packet 572 can include a source FEP address (SRC FEP ADDR) 573, a destination FEP address (DST FEP ADDR) 574, a job identifier (JOB ID) 575, a process identifier on the FEP (PIDONFEP) 576, a resource index 577, a memory key 578, an operation code (OPCODE) 579, a memory offset (BUF OFFSET) 580, and a length (LEN) 581, as non-limiting examples. The UET pack can further hold optional data in an optional data field 582.

According to some embodiments, for example, UET packets formatted based on the UET specification version 1.0.0, the SRC FEP ADDR 573 can define a UET address of a source accelerator (which may generate a command) while the DST FEP ADDR 574 can define a UET address of a destination accelerator (which may receive the command generated). The JOB ID 575 and the PIDONFEP 576 can be useful for parallel communication. The JOB ID 575 can identify a job, which may include a parallel job, within a cluster or a fabric, e.g., the scale-out fabric, uniquely and can be used for addressing or authorization purposes. The PIDONFEP 576 can be an identifier of a process associated with a FEP numbered from 0 to a number of process minus one (P - 1). The resource index 577 can identify resources within a process, such as a service or library as non-limiting examples. The memory key 577 can define a memory region that may be, for example, a target of a command associated with the UET packet. The OPCODE 579 can define an operation to be performed, for example, a read, write, or atomic operation as non-limiting examples. The LEN 581 can define a length of data within the optional data field 582. While an example embodiment of a UET packet is presented herein, it should be understood that alternative UET packets, for example, those described within the UET Specification, can also be used for tunneling UAL commands.

FIG. 5B illustrates an example scale-up message packet. The scale-up message packet can be a UAL packet 584 as defined in the UAL Specification and, as illustrated, may not be to scale with respect to the bit sizes of each field. Fiels in the UAL packet 584 can include as non-limiting examples a source accelerator identifier (SRCACCID) 585, a destination accelerator identifier (DSSTACCID) 586, a request type (REQTYPE) 587, a request address (REQADDR) 588, a request data (REQDATA) 589, and a request length (REQLEN) 590. The UAL packet 584 can also support optional data in an optional data field 591.

According to some embodiments, for example, UAL commands formatted based on the UALink Specification version 1.0, the SRCACCID 585 and the DSSTACCID 586 can define, based on an identifier, a source accelerator and a destination accelerator (e.g., an accelerator generating a command and an accelerator receiving the command generated, respectively). The REQTYPE 587 can define an operation (or request) to be performed, e.g., a read, write, or atomic as non-limiting examples, and the REQADDR 588 can provide an address for the operation or request defined in REQTYPE 587 to be performed. The address can be a memory address of the destination accelerator. The REQDATA 589 can include data to be used for the operation and the REQLEN 590 can define a length of data in the optional data field 591. While an example embodiment of a UAL command is provided in FIG. 5B, it should be understood that other commands, including alternative commands formatted using UAL or formatted using another protocol, can also be used.

According to some embodiments, tunneling a UAL packet in a UET packet can include placing the UAL packet in the optional data field of the UET packet. The UET packet may further include a modified operation code (OPCODE) to indicate that a payload is carried in the UET packet.

FIG. 6 illustrates an example embodiment of a tunneled packet that can be used in a computing network. As described hereinabove, the tunneled message may be formatted as a scale-out message, e.g., a UET packet 672, and can contain a scale-up message, e.g., a UAL command 684, contained therein. The tunneled packet of FIG. 6 can contain elements similar to those of FIGS. 5A and 5B, with similar elements labeled using like reference numbers but incremented by 100.

The UET packet 672 includes a SRC FEP ADDR 673, a DST FEPA DDR 674, a JOB ID 675, and a PIDONFEP 676. Additionally, the UET packet 672 can include a vendor-specific tunnel opcode 692 and tunnel params 693 to provide information, for example, that the UET packet is carrying a payload or a type of payload as non-limiting examples, to a device handling the UET packet. The vendor-specific tunnel opcode 692 and tunnel params 693 are further described hereinbelow. The UET packet 672 can further include a LEN field 681 and an optional data field 682.

The UAL command 684 can be tunneled within the UET packet 672 by being embedded within the optional data field 682 of the UET packet 672. The UAL command 684 can include a SRCACCID 685, DSSTACCID 686, REQTYPE 687, REQADDR 688, REQDATA 689, and REQLEN 690 as non-limiting examples. The UAL command packet 684 can further include optional data 691. The fields of the UET packet 672 and the UAL command 684 can be similar to those described hereinabove with respect to FIGS. 5A and 5B.

### Multiplexing and Demultiplexing of UAL Tunnels

According to some embodiments, a scale-out interface, e.g., a UET interface, on a scale-up switch, e.g., a UAL switch, can maintain a table that can map a destination accelerator identifier (for example, UAL dstaccid) to a scale-out address (for example, UET destination fabric endpoint identifier (DST FEP ADDR). This table can be used to lookup the UET Destination FEP based on a UAL dstaccid, and vice versa. Other parameters like JOBID and PIDONFEP can be further used to differentiated between multiple UET tunnels between a same source and destination FEP identifiers (e.g., same source and destination accelerators). A UET SES header can also be extended by an additional operational code which can indicate that an SES payload is a UAL tunnel. Other UET headers of UET like Ethernet, UDP/IP, TSS, or PDS, may not be affected.

### UAL over UET Tunnel Mode

According to some embodiments, a UAL over UET tunnel can use a vendor-defined opcode range as defined in Table 3.17 of the UET specification. For example, for the UET Specification released on June 11, 2025, Table 3-17 defines a vendor-defined opcode range of 0x30-0x3E. As noted hereinabove with respect to FIG. 6, the tunnel packet can include tunnel parameters. Example tunnel parameters to be used along with UAL over a UET tunnel can include one or more of the following as non-limiting examples.
a) Tunnel ID: A Tunnel ID parameter can be one of the Tunnel parameters that can be used by a scale-out fabric (e.g., the scale-out switches of the scale-out fabric) to load balance and route tunnel connections appropriately to avoid congestion.
b) Tunnel Payload Protocol: A Tunnel Payload Protocol parameter can indicate a protocol used by a tunneled message. As described hereinabove, a UAL message can be tunneled within a UET message and, accordingly the Tunnel Payload Protocol parameter can indicate that the included message is formatted using the UAL protocol. The methods described herein can be applied to other protocols, for example, ethernet for scale-up networking (ESUN), for carrying the messages of other protocols in a scale-out tunnel. Restated, the Tunnel Payload protocol identifies a protocol of an inner packet in a tunnel.
c) Tunnel Source Routing parameters: A scale-out fabric manager can usually upfront programs the UET Dest FEP tunnel addresses to be used with a given UAL Acc id. But the UAL switch can alternately use tunnel parameters to specify source routing, through which the UAL source switch initiating the UET Transaction would specify the route to be taken by the UET tunnel packet by providing the next hop address.
d) Tunnel Security Parameters: Instead of using UET specified TSS security, the UAL switch can use the Tunnel parameters to provide custom end to end security using Tunnel parameters. In this case the tunnel parameters shall carry the encryption and authentication information of the packet.

Embodiments of methods and devices described herein can be advantageous for communication in a computing network by removing a need for a NIC per xPU inside a scale-up system, by reducing cost of an overall system, or by simplifying xPU connectivity by eliminating a need to choose between sending data over scale-up (e.g., UAL) or scale-out communication (e.g., PCIE), among other benefits.

The teachings of all patents, published applications and references cited herein are incorporated by reference in their entirety.

While example embodiments have been particularly shown and described, it will be understood by those skilled in the art that various changes in form and details may be made therein without departing from the scope of the embodiments encompassed by the appended claims.
The following is a list of further preferred embodiments of the invention:
1. A method of communication in a computing network, the method comprising:
   by a scale-up switch:
   receiving a command packet generated by a compute component of a computing network, the compute component communicatively coupled to the scale-up switch;
   identifying a destination compute component in the computing network based on the command packet received;
   determining if the destination compute component is in a scale-up network of the computing network or a scale-out network of the computing network; and
   responsive to the destination compute component being in the scale-out network, embedding the command packet received in a network message and transmitting the network message to a scale-out fabric of the scale-out network, the scale-up switch communicatively coupled to the scale-out fabric.
2. The method of Embodiment 1, further comprising:
   by the scale-up switch:
   responsive to the destination compute component being in the scale-up network, transmitting the command packet to the destination compute component.
3. The method of Embodiment 19, wherein embedding the command packet in the network message includes:
   by the scale-up switch:
   generating the network message;
   encapsulating the command packet within a first field of the network message; and
   providing an indication of the command packet encapsulated, the indication provided in a second field of the network message and detectable by the scale-out fabric or the scale-up switch.
4. The method of Embodiment 3, wherein the network message further includes one or more of:
   a tunnel identifier, a payload protocol identifier, a routing parameter, or a security parameter.
5. The method of Embodiment 1, further comprising:
   by the scale-out fabric, routing the network message to the destination compute component of the computing network.
6. The method of Embodiment 5, wherein:
   routing the network message to the destination compute component includes, by the scale-out fabric, sending the network message to a destination scale-up switch, the destination scale-up switch configured to extract the command packet and to transfer the command packet extracted to the destination compute component.
7. The method of Embodiment 1, further comprising:
   by the scale-up switch, maintaining a table mapping a destination identifier of the command packet to a network address of the network message, wherein embedding the command packet in the network message includes mapping the destination identifier to the network address of the network message.
8. The method of Embodiment 7, wherein:
   the network address of the network message is associated with one or more of the destination compute component or a destination scale-up switch communicatively coupled to the destination compute component.
9. The method of Embodiment 1, further comprising:
   by the scale-up switch, managing at least a portion of a delivery of the network message over the network fabric.
10. The method of Embodiment 1, wherein:
   the network message is formatted using a remote direct memory access (RDMA) protocol, the RDMA protocol including an ultra ethernet transport (UET) protocol or a RDMA over converged ethernet (RoCE) protocol.
11. The method of Embodiment 1, wherein:
   the command packet is formatted using an ultra accelerator link (UAL) protocol or an ethernet for scale-up networking (ESUN) protocol.
12. A scale-up switch comprising:
   a processor configured to couple communicatively to a compute component of a scale-up network and to a scale-out fabric of a scale-out network, the scale-up network and the scale-out network being part of a computing network, the processor further configured to:
   receive a command packet generated by the compute component;
   identify a destination compute component of the computing network based on the command packet received;
   determine if the destination compute component is in a scale-up network or a scale-out network; and
   responsive to the destination compute component being in the scale-out network, embed the command packet in a network message and transmit the network message to the scale-out fabric.
13. The scale-up switch of Embodiment 12, wherein the processor is further configured to:
   responsive to the destination compute component being in the scale-up network, transmit the command packet to the destination compute component.
14. The scale-up switch of Embodiment 12, wherein embedding the command packet in the network includes, by the processor:
   generating the network message;
   encapsulating the command packet within a first field of the network message; and
   providing an indication of the command packet encapsulated, the indication provided in a second field of the network message and detectable by the scale-out fabric or the scale-up switch.
15. The scale-up switch of Embodiment 12, wherein the processor is further configured to:
   receive an inbound network message from the scale-out fabric;
   extract an inbound command packet from the inbound network message received; and
   perform an operation responsive to the inbound command packet extracted.
16. The scale-up switch of Embodiment 12, wherein the processor is further configured to:
   manage delivery of the network message over the network fabric.
17. The scale-up switch of Embodiment 12, further comprising:
   memory communicatively coupled to the processor, the memory configured to maintain a table mapping a destination identifier of the command packet to a network address of the network message, the destination identifier associated with a destination compute component of the computing network or a destination scale-up switch communicatively coupled to the destination compute component.
18. The scale-up switch of Embodiment 12, wherein:
   the processor is configured to receive and to transmit command packets formatted using a UAL protocol or an ESUN protocol.
19. The scale-up switch of Embodiment 12, wherein:
   the processor is configured to generate and to receive network messages formatted using a UET protocol or an RoCE protocol.
20. A hardware description language (HDL) design structure encoded on a machine readable data storage medium, said HDL design structure comprising elements that when processed in a computer-aided design system generates a machine-executable representation of a scale-up switch, wherein the HDL design structure comprises:
   a first communication module configured to couple communicatively to a compute component of a scale-up network, the scale-up network being part of a computing network;
   a second communication module configured to couple communicatively to a scale-out fabric of a scale-out network, the scale-out network being part of the computing network; and
   a processing module communicatively coupled to the first communication module and the second communication module, the processing module configured to:
      receive a command packet generated by the compute component;
      identify a destination compute component of the computing network based on the command packet received;
      determine if the destination compute component is in the scale-up network or the scale-out network; and
      responsive to the destination compute component being in the scale-out network, embed the command packet in a network message and transmit the network message to the scale-out fabric.

## Claims

1. A method of communication in a computing network, the method comprising:
by a scale-up switch:
receiving a command packet generated by a compute component of a computing network, the compute component communicatively coupled to the scale-up switch;
identifying a destination compute component in the computing network based on the command packet received;
determining if the destination compute component is in a scale-up network of the computing network or a scale-out network of the computing network; and
responsive to the destination compute component being in the scale-out network, embedding the command packet received in a network message and transmitting the network message to a scale-out fabric of the scale-out network, the scale-up switch communicatively coupled to the scale-out fabric.

2. The method of Claim 1, further comprising:
by the scale-up switch:
responsive to the destination compute component being in the scale-up network, transmitting the command packet to the destination compute component.

3. The method of Claim 1 or 2, wherein embedding the command packet in the network message includes:
by the scale-up switch:
generating the network message;
encapsulating the command packet within a first field of the network message; and
providing an indication of the command packet encapsulated, the indication provided in a second field of the network message and detectable by the scale-out fabric or the scale-up switch.

4. The method of Claim 3, wherein the network message further includes one or more of:
a tunnel identifier, a payload protocol identifier, a routing parameter, or a security parameter.

5. The method of Claim 1, further comprising:
by the scale-out fabric, routing the network message to the destination compute component of the computing network.

6. The method of Claim 5, wherein:
routing the network message to the destination compute component includes, by the scale-out fabric, sending the network message to a destination scale-up switch, the destination scale-up switch configured to extract the command packet and to transfer the command packet extracted to the destination compute component.

7. The method of one of Claims 1 to 6, further comprising:
by the scale-up switch, maintaining a table mapping a destination identifier of the command packet to a network address of the network message, wherein embedding the command packet in the network message includes mapping the destination identifier to the network address of the network message.

8. The method of Claim 7, wherein:
the network address of the network message is associated with one or more of the destination compute component or a destination scale-up switch communicatively coupled to the destination compute component.

9. The method of one of Claims 1 to 8, further comprising:
by the scale-up switch, managing at least a portion of a delivery of the network message over the network fabric, or
wherein:
the network message is formatted using a remote direct memory access (RDMA) protocol, the RDMA protocol including an ultra ethernet transport (UET) protocol or a RDMA over converged ethernet (RoCE) protocol, or
wherein:
the command packet is formatted using an ultra accelerator link (UAL) protocol or an ethernet for scale-up networking (ESUN) protocol.

10. A scale-up switch comprising:
a processor configured to couple communicatively to a compute component of a scale-up network and to a scale-out fabric of a scale-out network, the scale-up network and the scale-out network being part of a computing network, the processor further configured to:
receive a command packet generated by the compute component;
identify a destination compute component of the computing network based on the command packet received;
determine if the destination compute component is in a scale-up network or a scale-out network; and
responsive to the destination compute component being in the scale-out network, embed the command packet in a network message and transmit the network message to the scale-out fabric.

11. The scale-up switch of Claim 10, wherein the processor is further configured to:
responsive to the destination compute component being in the scale-up network, transmit the command packet to the destination compute component.

12. The scale-up switch of Claim 10 or 11, wherein embedding the command packet in the network includes, by the processor:
generating the network message;
encapsulating the command packet within a first field of the network message; and
providing an indication of the command packet encapsulated, the indication provided in a second field of the network message and detectable by the scale-out fabric or the scale-up switch.

13. The scale-up switch of one of Claims 10 to 10, wherein the processor is further configured to:
receive an inbound network message from the scale-out fabric;
extract an inbound command packet from the inbound network message received; and
perform an operation responsive to the inbound command packet extracted.

14. The scale-up switch of one of Claims 10 to 13, wherein the processor is further configured to:
manage delivery of the network message over the network fabric or further comprising:
memory communicatively coupled to the processor, the memory configured to maintain a table mapping a destination identifier of the command packet to a network address of the network message, the destination identifier associated with a destination compute component of the computing network or a destination scale-up switch communicatively coupled to the destination compute component, or
wherein:
the processor is configured to receive and to transmit command packets formatted using a UAL protocol or an ESUN protocol or wherein:
the processor is configured to generate and to receive network messages formatted using a UET protocol or an RoCE protocol.

15. A hardware description language (HDL) design structure encoded on a machine readable data storage medium, said HDL design structure comprising elements that when processed in a computer-aided design system generates a machine-executable representation of a scale-up switch, wherein the HDL design structure comprises:
a first communication module configured to couple communicatively to a compute component of a scale-up network, the scale-up network being part of a computing network;
a second communication module configured to couple communicatively to a scale-out fabric of a scale-out network, the scale-out network being part of the computing network; and
a processing module communicatively coupled to the first communication module and the second communication module, the processing module configured to:
receive a command packet generated by the compute component;
identify a destination compute component of the computing network based on the command packet received;
determine if the destination compute component is in the scale-up network or the scale-out network; and
responsive to the destination compute component being in the scale-out network, embed the command packet in a network message and transmit the network message to the scale-out fabric.
